# EUROPÄISCHE PATENTSCHRIFT

(11) **EP 0 631 834 B1**
(45) Veröffentlichungstag und Bekanntmachung des Hinweises auf die Patenterteilung: **12.08.1998**
(21) Anmeldenummer: 94109244.7
(22) Anmeldetag: 16.06.1994
(51) Int. Cl.: B23D 77/02, B23B 27/14

(54) **Messer für eine Reibahle**
Insert for reamer
Plaquette de coupe pour alésoir

(30) Priorität: 21.06.1993 DE 4320511
(43) Veröffentlichungstag der Anmeldung: 04.01.1995
(73) Patentinhaber: MAPAL Fabrik für Präzisionswerkzeuge Dr. Kress KG, D-73431 Aalen (DE)
(72) Erfinder: Kress, Dieter, Dr., D-73431 Aalen (DE); Häberle, Friedrich, D-73466 Lauchheim (DE)
(74) Vertreter: Gleiss, Alf-Olav, Dr.jur. Dipl.-Ing.

(56) Entgegenhaltungen:
- DE-A- 3 404 005
- DE-A- 4 102 716
- GB-A- 2 063 732

## Beschreibung

Die Erfindung betrifft eine Messerplatte für eine Reibahle zur Feinbearbeitung von metallischen Werkstücken gemäß Oberbegriff des Anspruchs 1.

Bei der Feinbearbeitung von metallischen Werkstücken mittels einer Reibahle fallen sehr dünne Späne an, deren Dicke im Bereich von wenigen 1/100 mm liegt. Aufgrund der geringen Stärke brechen die Späne sehr schwer, so daß sich lange Späne bilden, die -besonders bei der Feinbearbeitung- insofern stören, als die bearbeitete Oberfläche zerkratzt werden kann.

Es ist daher bekannt, auf der Oberfläche der Messerplatte Spanleitstufen vorzusehen. Die von der Schneide der Messerplatte abgetragenen Späne laufen entlang der Spanfläche, bis sie an die Spanleitstufe stoßen und so umgebogen werden, daß sie brechen. Es hat sich jedoch gezeigt, daß die sehr dünnen Späne, wie sie bei der Feinbearbeitung entstehen, auch bei Einsatz derartiger Spanleitstufen immer noch so lang sind, daß sie das Ergebnis der Feinbearbeitung beeinträchtigen.

Es ist daher Aufgabe der Erfindung, eine Messerplatte für eine Reibahle zu schaffen, die sich dadurch auszeichnet, daß auch bei der Feinbearbeitung kurze Späne entstehen.

Diese Aufgabe wird bei einer Messerplatte gemäß Oberbegriff des Anspruchs 1 mit Hilfe der in diesem Anspruch genannten Merkmale gelöst. Dadurch, daß die Spanleitstufe im Scheitelpunkt der schneiden, das heißt, im Übergangsbereich zwischen Haupt- und Nebenschneide, einen Hochpunkt aufweist, von dem aus die Spanleitstufe im Bereich der Hauptschneide abfällt, das heißt, einen zunehmenden Abstand zur Schneide aufweist, und im Bereich der Nebenschneide parallel zu dieser verläuft oder ebenfalls abfallend angeordnet ist. Durch die Zuordnung von Scheitelpunkt der Schneiden und Hochpunkt der unter einem Winkel zueinander verlaufenden Spanleitstufen ergibt sich ein besonders vorteilhaftes Spanbeeinflussungsverhalten, das darin resultiert, daß kurze Späne entstehen.

Bevorzugt wird eine Ausführungsform der Messerplatte, bei der die Hauptschneide zwei Bereiche aufweist, die unter verschiedenen Neigungswinkeln abfallen. Bei einer derartigen Ausgestaltung der Messerplatte ist die Spanleitstufe so ausgebildet, daß sie vom Hochpunkt aus im Bereich der Hauptschneide gleichmäßig abfällt.

Bevorzugt wird weiterhin eine Ausführungsform der Messerplatte, deren Hauptschneide einem Kreisbogen, beziehungsweise einer Kurve folgt. Hier ist die Spanleitstufe so ausgebildet, daß sie, ausgehend vom Hochpunkt -in Richtung auf die Stirnseite der Messerplatte gesehen- zwei verschiedene Bereiche mit unterschiedlichen Neigungswinkeln aufweist. Eine derartige Ausgestaltung zeichnet sich durch ein besonders gutes Spanbrecherverhalten aus, das heißt, auch bei der Feinbearbeitung entstehen kurze Späne.

Schließlich wird eine Ausführungsform der Messerplatte bevorzugt, die sich dadurch auszeichnet, daß die Spanleitstufe eine Höhe von ca. 0,1 mm aufweist. Eine derartig geringe Höhe der Spanleitstufe bedeutet, daß bei deren Herstellung nur wenig Material von der Oberseite der Messerplatte abgetragen werden muß, sofern die Spanleitstufe und die daran angrenzende Spanfläche in einem Schleifverfahren hergestellt werden.

Weitere Ausgestaltungen der Messerplatte ergeben sich aus den übrigen Unteransprüchen.

Die Erfindung wird im folgenden anhand der Zeichnung näher erläutert. Es zeigen:
- Figur 1: eine Draufsicht auf eine erste Ausführungsform einer Messerplatte;
- Figur 2: eine perspektivische Ansicht der Vorderseite der in Figur 1 wiedergegebenen Messerplatte und
- Figur 3: eine schematische Draufsicht auf ein weiteres Ausführungsbeispiel einer Messerplatte.

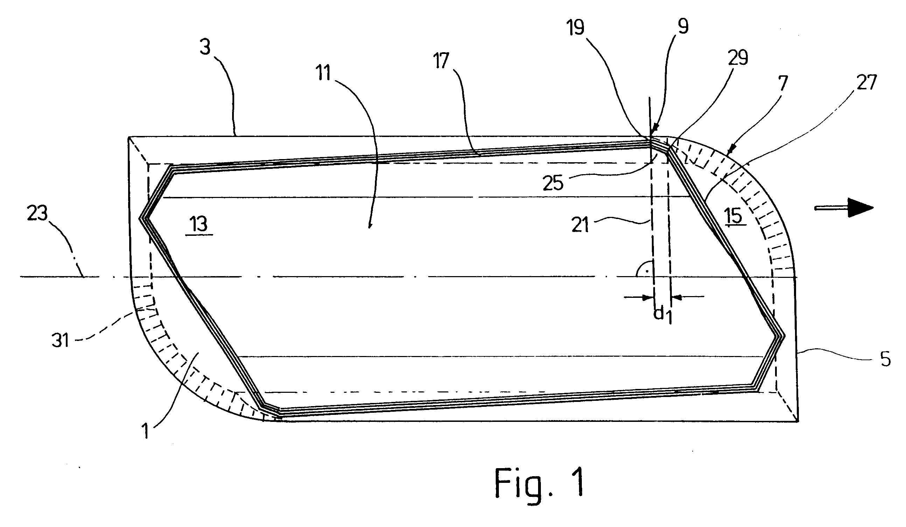

Figur 1 zeigt eine Messerplatte 1 für ein Feinbearbeitungswerkzeug, insbesondere für eine Reibahle, die bekanntlich der Oberflächenbearbeitung einer Bohrungswandung dient. Die Messerplatte 1 wird dazu am Kopf der Reibahle auf geeignete Weise so festgespannt, daß sie deren Umfangsfläche überragt. Die Reibahle wird in Rotation versetzt und in die zu bearbeitende Bohrung eingeführt, wobei von der Bohrungswandung dünne Späne mit einer Dicke von wenigen 1/100 mm abgetragen werden. Die in Figur 1 dargestellte Messerplatte 1 wird so in der Reibahle befestigt, daß die Längskante 3 im wesentlichen parallel zur Drehachse des Werkzeugs verläuft und die Stirnseite 5 der Messerplatte 1 in die durch den Doppelpfeil dargestellte angedeutete Vorschubrichtung weist.

Die Längskante 3 der im wesentlichen rechteckig ausgebildeten Messerplatte 1 geht über einen -hier kreisbogenförmig gekrümmten- Bereich in die Stirnseite 5 über, wobei der kreisbogenförmig gekrümmte Bereich die Hauptschneide 7 der Messerplatte bildet. Der Übergang zwischen Hauptschneide 7 und der die Nebenschneide der Messerplatte 1 bildenden Längskante 3 erfolgt in einem Scheitelpunkt 9, der bei in eine Reibahle eingesetzter Messerplatte 1 den radial äußersten Punkt des Werkzeugs bildet.

Auf der in der Darstellung gemäß Figur 1 dem Betrachter zugewandten Oberseite der Messerplatte 1, der sogenannten Messerbrust 11, ist eine Erhöhung 13 erkennbar, die dadurch entstanden ist, daß der unmittelbar an die Schneidkanten der Messerplatte 1 angrenzende Bereich der Messerbrust 11 abgeschliffen wurde, so daß Spanflächen 15 ausgebildet werden, die die Erhöhung 13 umgeben. Es ist grundsätzlich auch möglich, die Erhöhung in einem Sintervorgang herzustellen.

Die seitlichen Begrenzungskanten der Erhöhung 13 bilden die Spanleitstufe 17, auf deren Verlauf noch im einzelnen eingegangen wird.

Die in Figur 1 wiedergegebene Messerplatte 1 ist als Wendeplatte ausgebildet, das heißt, die obere und rechte Außenkante der Messerplatte, das heißt, die Längskante 3, kreisbogenförmige Bereich der Hauptschneide 7 und die Stirnseite 5 der Messerplatte 1 sind auf der diagonal gegenüber liegenden Seite der Messerplatte identisch ausgebildet. Das heißt also, die Messerplatte kann um eine senkrecht auf der Messerbrust 11 stehenden Drehachse um 180° gedreht werden, falls die hier oben beziehungsweise oben rechts vorhandenen Schneidkanten durch die Bearbeitung eines Werkstücks stumpf geworden sind. Es zeigt sich jedoch, daß die Ausbildung als Wendeplatte keinesfalls zwingend erforderlich ist. Die in Figur 1 sich ergebende linke Rückseite der Messerplatte spielt bei dem Einsatz der Hauptschneide 7 und der angrenzenden Nebenschneide 3 keine Rolle, so daß deren Ausgestaltung letztlich belanglos ist. Durch die Ausgestaltung als Wendeplatte läßt sich diese jedoch besser ausnutzen, das heißt, wirtschaftlicher einsetzen.

Für die weiteren Betrachtungen wird nur auf die obere Längskante beziehungsweise Nebenschneide 3 und die Stirnseite 5, sowie den dazwischenliegenden Bereich der Hauptschneide 7 eingegangen.

Die Spanleitstufe 17 erstreckt sich nicht geradlinig über den gesamten Bereich der Haupt- und Nebenschneide der Messerplatte. Vielmehr zeichnet sie sich durch einen Hochpunkt 19 aus, der der zugehörigen Schneidkante am nächsten liegt. Die übrigen Bereiche der Spanleitstufe 17 weisen also einen größeren Abstand zu der jeweiligen Schneidkante auf. Die hier dargestellte Messerplatte 1 zeichnet sich dadurch aus, daß der Hochpunkt 19 der Spanleitstufe 17 unmittelbar dem Scheitelpunkt 9 der Schneidkanten der Messerplatte 1 zugeordnet ist. Das heißt, der Scheitelpunkt 9 befindet sich unmittelbar oberhalb des Hochpunkts 19, so daß beide Punkte auf einer gedachten Linie 21 liegen, die die gedachte Mittellinie 23 der Messerplatte 1 unter einem Winkel von 90° schneidet.

Der Abstand zwischen dem Scheitelpunkt 9 und dem Hochpunkt 19 -gemessen in Richtung der gedachten Linie 21- wird in Abhängigkeit von dem zu bearbeitenden Material oder Werkstücks festgelegt. Er beträgt bei Werkstücken aus Stahl 3/10 mm bis 7/10 mm, vorzugsweise 5/10 mm; bei Werkstücken aus Aluminium 5/10 mm bis 10/10 mm, vorzugsweise 8/10 mm.

Die Spanleitstufe 17 kann parallel zu der Längskante beziehungsweise Nebenschneide 3 verlaufen. Es ist jedoch auch möglich, daß beide -wie hier dargestellt-einen spitzen Winkel einschließen, dessen Scheitelpunkt in Richtung zur Stirnfläche 5 der Messerplatte 1 weist. Die Spanleitstufe 17 zeichnet sich dadurch aus, daß sie im Bereich der einem Kreisbogen folgenden Hauptschneide 7 zwei Abschnitte aufweist, die unterschiedliche Neigungswinkel haben. In einem ersten Abschnitt 25 fällt die Spanleitstufe 17 in Richtung auf die Stirnseite 5 unter einem Winkel von 10° bis 30°, insbesondere von 15° bis 25° ab. Besonders bevorzugt wird ein Neigungswinkel von ca. 20°.

In einem angrenzenden zweiten Abschnitt 27 zeichnet sich die Spanleitstufe 17 durch eine wesentlich steilere Neigung aus. Sie fällt hier unter einem Winkel von 40° bis 80°, vorzugsweise von 50° bis 70°, ab. Besonders bevorzugt wird hier ein Neigungswinkel von ca. 60°.

Die Spanleitstufe 17 zeichnet sich hier also durch zwei Knickpunkte aus: der erste Knickpunkt fällt zusammen mit dem Hochpunkt 19 der Spanleitstufe, der unmittelbar dem Scheitelpunkt 9 der Messerplatte 1 gegenüberliegt. Rechts davon, das heißt, im Bereich der Hauptschneide 7 der Messerplatte 1 befindet sich ein weiterer Knickpunkt 29, der durch die beiden aneinander angrenzenden Abschnitte 25 und 27 mit verschiedenem Neigungswinkel gebildet wird.

Der zweite Knickpunkt 29 weist -in horizontaler Richtung gemessen- einen Abstand zum Hochpunkt 19 von d₁ von etwa 0,5 mm auf. Das heißt also, der erste Abschnitt 25 ist wesentlich kürzer als der zweite Abschnitt 27, der sich von dem Knickpunkt 29 aus bis praktisch zur Stirnseite 5 der Messerplatte erstreckt.

Insgesamt ist erkennbar, daß die Spanleitstufe 17 im Bereich der Nebenschneide 3 wesentlich flacher abfällt, das heißt, sich in Richtung zur Mittellinie 23 senkt, als im Bereich der Hauptschneide 7, wo die Spanleitstufe in dem ersten Abschnitt 25 unter einem Winkel von vorzugsweise 20° und dem zweiten Abschnitt 27 unter einem Winkel von ca. 60°. abfällt. Der Neigungswinkel im Bereich der Nebenschneide beträgt 0° bis 10°, vorzugsweise 1° bis 5°, und insbesondere 3°.

Aufgrund des sich an die Schneidkante anschließenden, sogenannten Freiwinkels ist die Rückseite der Messerplatte kleiner als deren Vorderseite. Dies ist durch die Einzeichnung der gestrichelten Kontur 31 der Rückseite in Figur 1 angedeutet.

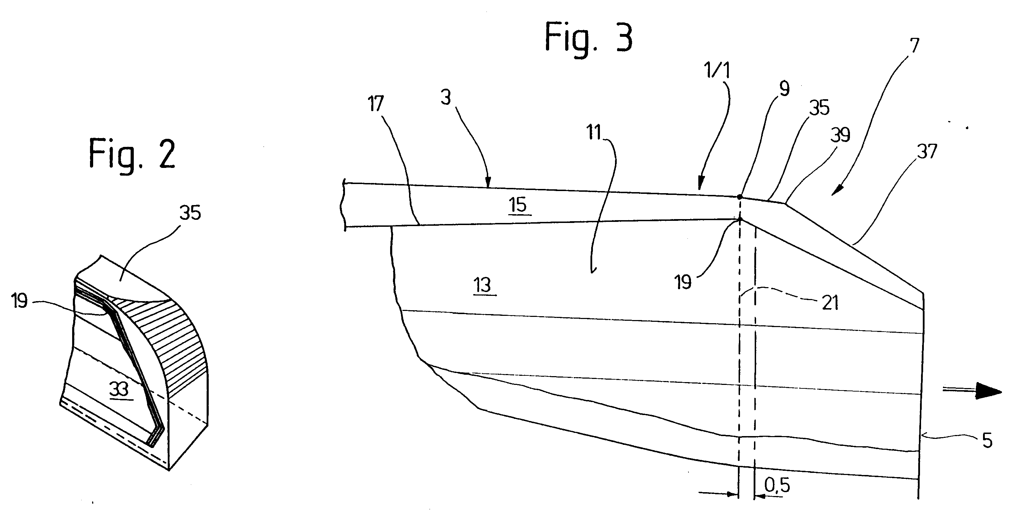

Figur 2 zeigt in perspektivischer Ansicht die rechte obere Kante der Messerplatte 1, wie sie in Figur 1 wiedergegeben ist. Gleiche Teile sind mit gleichen Bezugsziffern versehen, so daß auf deren ausführliche Beschreibung verzichtet werden kann.

Aus der Darstellung ist ersichtlich, daß die Messerplatte 1 eine sich zur Mittellinie 3 senkende Spann-Nut 33 aufweist, die im Querschnitt im wesentlichen V-förmig ausgebildet ist. Die seitlichen Begrenzungsflächen 35 der Messerplatte 1 sind gegenüber der Horizontalen geneigt, um den sogenannten Freiwinkel auszubilden. Daher ist auch, wie gesagt, die Rückseite der Messerplatte 1 kleiner, als die Vorderseite beziehungsweise Messerbrust 11.

Aus Figur 2 ist ableitbar, daß die Spanleitstufe im Bereich der Mittellinie 23 am niedrigsten ist. Nahe dem Hochpunkt 19 beträgt ihre Höhe 0,05 bis 0,3 mm, vorzugsweise 0,1 mm. Aufgrund dieser geringen Höhe der Spanleitstufe bedarf es also eines nur sehr geringen Abtragens des Materials der Messerplatte im Bereich der Spanfläche 15, die bei dem hier dargestellten Ausführungsbeispiel als rundum durchgehende Ebene ausgebildet ist.

Figur 3 zeigt schließlich ein weiteres Ausführungsbeispiel einer Messerplatte 1/1, von der hier allerdings lediglich die rechte obere Kante dargestellt ist. Es ist möglich, auch diese Messerplatte 1/1 als viereckige Wendeplatte auszubilden, so daß also auch ihre diagonal gegenüberliegende Kante so ausgestaltet ist, wie anhand von Figur 3 ersichtlich.

Die Messerplatte 1/1 ist vorzugsweise im wesentlichen rechteckförmig ausgebildet,wobei die obere Längskante, die hier im wesentlichen horizontal verläuft, die Nebenschneide 3 bildet. Von einem Scheitelpunkt 9 aus fällt die Schneide gegenüber der horizontalen, gedachten Fortsetzung der Längskante ab, und zwar in einem ersten Bereich 35 etwa unter einem Winkel von 3° und in einem zweiten Bereich 37 etwa unter einem Winkel von 30°. Der erste Bereich 35 und der zweite Bereich 37 bilden im Übergangsbereich einen Knickpunkt 39.

Die Spanleitstufe 17 wird wiederum dadurch gebildet, daß auf der Messerbrust 11 eine Erhöhung 13 vorgesehen ist, die von einer tiefer liegenden Spanfläche 15 umgeben ist. Die Flanken der Erhöhung bilden die Spanleitstufe 17.

Auch bei dem in Figur 3 dargestellten Ausführungsbeispiel verläuft die Spanleitstufe 17 im Übergangsbereich zwischen Nebenschneide 3 und Hauptschneide 7 unter Ausbildung eines Hochpunkts 19, der der Schneide der Messerplatte am nächsten liegt. Im Bereich der Hauptschneide 7, das heißt, in deren ersten Bereich 35 und deren zweiten Bereich 37 verläuft die Spanleitstufe 17 praktisch geradlinig. Sie weist einen durchgehenden Neigungswinkel von 10° bis 30°, insbesondere von 15° bis 25° auf. Besonders bevorzugt wird allerdings ein Neigungswinkel von 20°, wie auch in Figur 3 eingezeichnet.

Bei dem Ausführungsbeispiel der Messerplatte 1/1, bei der die Hauptschneide 7 zwei Bereiche mit verschiedenen Neigungswinkeln aufweist, zeichnet sich die Spanleitstufe 17 dadurch aus, daß sie vorzugsweise gradlinig durchgehend ausgebildet ist, also außer dem Hochpunkt keinen weiteren Knickpunkt aufweist, wie dies bei dem Ausführungsbeispiel gemäß Figur 1 der Fall ist.

Im Bereich der Nebenschneide 3 fällt die Spanleitstufe -entgegen der durch einen Doppelpfeil angedeuteten Vorschubrichtung des Werkzeugs- ab, das heißt also, sie schließt mit der Nebenkante 3 einen Winkel ein, dessen Scheitel in Richtung der Stirnseite 5 der Messerplatte 1/1 weist.

Der Neigungswinkel der Spanleitstufe 17 im Bereich der Nebenschneide 3 kann auch 0° betragen. Bevorzugt wird ein Winkel von 1° bis 10°, vorzugsweise von 2° bis 5°, insbesondere von 3°.

Bei dem in Figur 3 dargestellten Ausführungsbeispiel ist wichtig, daß auch hier, wie in Figur 1, der Hochpunkt 19 unterhalb des Scheitelpunkts 9 liegt, das heißt, die beiden Punkte liegen auf einer gedachten Linie 21, die senkrecht steht auf einer aus der Teilansicht gemäß Figur 3 nicht ersichtlichen Mittellinie des Messerplatte 1/1.

Der -entlang der gedachten Linie 21 gemessene- Abstand zwischen dem Scheitelpunkt 9 und dem Hochpunkt 19 wird auch hier in Abhängigkeit von dem Material des bearbeiteten Werkstücks festgelegt. Die Abstandswerte, die für das Ausführungsbeispiel gemäß Figur 1 angegeben wurden gelten auch für das anhand von Figur 3 erläuterten Ausführungsbeispiels.

Beiden Ausführungsbeispielen gemäß Figur 1 und Figur 3 ist gemeinsam, daß die Spanleitstufe 17 auch einer Kurve folgen kann, die beispielsweise kreisbogenförmig ausgebildet ist, wobei der Mittelpunkt des Kreisbogens weit außerhalb des Grundkörpers der Messerplatte liegt.

Der anhand der Figuren 1 und 3 erläuterte Grundgedanke der Anordnung der Spanleitstufe 17 kann auch auf andere Ausgestaltungen der Messerplatte übertragen werden. Wesentlich ist, daß der Hochpunkt 19 der Spanleitstufe dem Scheitelpunkt 9 der Messerplatte zugeordnet und in einem auf das Material des bearbeiteten Werkstücks abgestimmten Abstand angeordnet ist, also dem Übergangsbereich zwischen Neben- und Hauptschneide, der den radial äußersten Punkt der Messerplatte bildet, sofern diese in eine Reibahle eingesetzt ist. Der Scheitelpunkt kann beispielsweise durch Anlegen einer gedachten Tangente an die Schneidkante der Messerplatte gefunden werden. Ausgehend von dem Hochpunkt 19 fällt die Spanleitstufe -zumindest im Bereich der Hauptschneide- ab, das heißt, der Abstand zwischen Spanleitstufe und Schneidkante nimmt zu. Im Bereich der Nebenkante kann der Verlauf der Spanleitstufe so gewählt werden, daß diese parallel zur Nebenkante angeordnet ist, oder aber unter einem flachen, das heißt, spitzen Winkel abfällt. Auf jeden Fall ist ein Knickpunkt im Verlauf der Spanleitstufe vorgesehen, der deren Hochpunkt bildet.

Ein weiterer Knickpunkt im Verlauf der Spanleitstufe kann dadurch gebildet werden, daß zwei Abschnitte 25 und 27 mit verschiedenem Neigungswinkel vorhanden sind. Diese Ausgestaltung der Spanleitstufe wird besonders bevorzugt für Messerplatten, deren Hauptschneide einem Bogen folgt, wie anhand von Figur 1 erläutert.

Es ist also auch möglich, die hier vorgegebene Konfiguration einer Spanleitstufe auch bei dreieckigen oder sonstigen mehreckigen, beispielsweise sechseckigen, Messerplatten einzusetzen. Um das Verhalten des Spanablaufs optimal beeinflussen zu können, ist es möglich, den Neigungswinkel der Spanleitstufe im Bereich der -auch relativ lang gestreckten- Nebenschneide 3 beziehungsweise der Hauptschneide 7 an das Material anzupassen, aus dem das bearbeitete Werkstück besteht. Es hat sich herausgestellt, daß auch bei verschiedensten Materialien kleine Späne ausgebildet werden, obwohl die Höhe der Spanleitstufe mit vorzugsweise 0,1 mm im Vergleich zu herkömmlichen Messerplatten sehr gering ist, bei denen auch eine Höhe von mehr als 0,3 mm gegeben sein kann.

## Patentansprüche

1. Messerplatte für eine Reibahle zur Feinbearbeitung von metallischen Werkstücken mit einer Haupt- und einer Nebenschneide (7,3), mit einer an diese Schneiden heranreichenden Spanfläche und einer diese begrenzenden Spanleitstufe (17), **dadurch gekennzeichnet,** daß die Spanleitstufe (17) im Bereich des Scheitelpunkts (9) der Schneiden (3,7) einen Hochpunkt (19) aufweist, von dem aus die Spanleitstufe (17) im Bereich der Hauptschneide (7) abfällt, das heißt, einen zunehmenden Abstand zur Hauptschneide (7) aufweist, und im Bereich der Nebenschneide (3) parallel zur Nebenschneide verläuft oder ebenfalls abfallend angeordnet ist.

2. Messerplatte nach Anspruch 1, **dadurch gekennzeichnet,** daß die Spanleitstufe im Bereich der Nebenschneide (3) flach abfallend angeordnet ist und -in Draufsicht auf die Vorderseite (11) der Messerplatte (1) gesehen- einen spitzen Winkel mit der Nebenschneide einschließt.

3. Messerplatte nach Anspruch 1 oder 2, **dadurch gekennzeichnet,** daß die Schneide der Messerplatte (1) im Bereich der Hauptschneide (7) zwei Bereiche (35,37) mit verschiedenen Neigungswinkeln aufweist.

4. Messerplatte nach Anspruch 3, **dadurch gekennzeichnet,** daß die Hauptschneide (7) im -in Richtung auf die Stirnseite (5) der Messerplatte (1) gesehen- vorderen, ersten Bereich (37) unter einem Winkel von ca. 30° zur gedachten Mittellinie (23) der Messerplatte (1) abfällt, und im hinteren, zweiten Bereich (35), der an den Scheitelpunkt (9) angrenzt und in die Nebenschneide (3) übergeht, unter einem Winkel von ca. 3° zur gedachten Mittellinie (23) der Messerplatte (1) abfällt.

5. Messerplatte nach Anspruch 3 oder 4, **dadurch gekennzeichnet,** daß die Spanleitstufe (17), ausgehend von dem Hochpunkt (19), in Richtung auf die Stirnseite (5) der Messerplatte (1) gesehen, unter einem Winkel von 10° bis 30°, vorzugsweise von 15° bis 25° und insbesondere von 20° abfällt.

6. Messerplatte nach Anspruch 1 oder 2, **dadurch gekennzeichnet,** daß die Hauptschneide (7) der Messerplatte (1) einem Bogen folgt.

7. Messerplatte nach Anspruch 6, **dadurch gekennzeichnet,** daß die Spanleitstufe (17), ausgehend von dem Hochpunkt (19) -in Richtung auf die Stirnseite (5) der Messerplatte (1/1) gesehen- in einem ersten Abschnitt (25) unter einem Winkel von ca. 10° bis 30°, insbesondere von 15° bis 25° und vorzugsweise von etwa 20° zur gedachten Mittellinie (23) der Messerplatte (1/1) abfällt und in einem sich daran anschließenden zweiten Abschnitt (27) unter einem Winkel von ca. 40° bis 80°, insbesondere von 50° bis 70° und vorzugsweise von 60° abfällt.

8. Messerplatte nach Anspruch 7, **dadurch gekennzeichnet,** daß der erste Abschnitt (25) der Spanleitstufe (17) wesentlich kürzer ist als der zweite Abschnitt (27).

9. Messerplatte nach Anspruch 8, **dadurch gekennzeichnet,** daß der erste Abschnitt (25) sich über eine -parallel zur Mittellinie (23) der Messerplatte (1) gemessen- Strecke von ca. 0,5 mm erstreckt.

10. Messerplatte nach einem der vorhergehenden Ansprüche, **dadurch gekennzeichnet,** daß die Höhe der Spanleitstufe (17) im Bereich des Hochpunkt (19) 0,05 mm bis 0,3 mm, vorzugsweise 0,1 mm beträgt.

11. Messerplatte nach einem der vorhergehenden Ansprüche, **gekennzeichnet durch** die Ausgestaltung als Wendeplatte, die zur optimalen Ausnutzung der Schneidkanten um eine senkrecht zur Oberfläche (Messerbrust (11)) verlaufenden Mittelachse um 180° gedreht werden kann.

12. Messerplatte nach einem der vorhergehenden Ansprüche, **dadurch gekennzeichnet,** daß diese im wesentlichen rechteckförmig ausgebildet ist, wobei die längere Außenkante der Messerplatte (1;1/1) die Nebenschneide (3) darstellt.

13. Messerplatte nach einem der vorhergehenden Ansprüche, **dadurch gekennzeichnet,** daß der -senkrecht zur Mittellinie (23) der Messerplatte (1) gemessene- Abstand zwischen dem Scheitelpunkt (9) und dem Hochpunkt (19) in Abhängigkeit von dem Material des bearbeiteten Werkstücks festgelegt ist.

14. Messerplatte nach Anspruch 13, **dadurch gekennzeichnet,** daß der Abstand zwischen Scheitelpunkt (9) und Hochpunkt (19) bei einem Werkstück aus Stahl 3/10 mm bis 7/10 mm, vorzugsweise 5/10 mm beträgt.

15. Messerplatte nach Anspruch 13, **dadurch gekennzeichnet,** daß der Abstand zwischen Scheitelpunkt (9) und Hochpunkt (19) bei einem Werkstück aus Aluminium 5/10 mm bis 10/10 mm, vorzugsweise 8/10 mm beträgt.

## Claims

1. A knife plate for a reamer for the fine machining of metal workpieces, with a primary and a secondary cutting edge (7, 3), with a face extending to these cutting edges, and with a chip guide step (17) bordering the said face, **characterised in that**, in the region of the apex (9) of the cutting edges (3, 7), the chip guide step (17) has a high point (19) from which the chip guide step (17) slopes downwards in the region of the primary cutting edge (7), that is to say, is at an increasing distance from the primary cutting edge (7), and, in the region of the secondary cutting edge (3), the said guide step extends parallel to the secondary cutting edge or is likewise disposed in a downward-sloping manner.

2. A knife plate as claimed in claim 1, **characterised in that**, in the region of the secondary cutting edge (3), the chip guide step is disposed in an evenly downward-sloping manner and, when the front (11) of the knife plate (1) is viewed from above, the said guide step is at an acute angle to the secondary cutting edge.

3. A knife plate as claimed in claim 1 or claim 2, **characterised in that**, in the region of the primary cutting edge (7), the cutting edge of the knife plate (1) has two regions (35, 37) with different angles of slope.

4. A knife plate as claimed in claim 3, **characterised in that**, in the forward, first region (37) in a view towards the front side (5) of the knife plate (1), the primary cutting edge (7) slopes downwards at an angle of approx. 30° to the imaginary centre line (23) of the knife plate (1) and, in the rearward, second region (35) which borders on the apex (9) and becomes the secondary cutting edge (3), the said primary cutting edge slopes downwards at an angle of approx. 3° to the imaginary centre line (23) of the knife plate (1).

5. A knife plate as claimed in claim 3 or claim 4, **characterised in that**, in a view towards the front side (5) of the knife plate (1), the chip guide step (17), extending from the high point (19), slopes downwards at an angle of 10° to 30°, preferably 15° to 25°, and in particular 20°.

6. A knife plate as claimed in claim 1 or claim 2, **characterised in that** the primary cutting edge (7) of the knife plate (1) is curved.

7. A knife plate as claimed in claim 6, **characterised in that**, in a view towards the front side (5) of the knife plate (1/1), the chip guide step (17), extending from the high point (19), slopes downwards in a first portion (25) at an angle of approx. 10° to 30°, in particular 15° to 25°, and preferably approximately 20°, to the imaginary centre line (23) of the knife plate (1/1) and, in an adjoining second portion (27), the said guide step slopes downwards at an angle of approx. 40° to 80°, in particular 50° to 70°, and preferably 60°.

8. A knife plate as claimed in claim 7, **characterised in that** the first portion (25) of the chip guide step (17) is substantially shorter than the second portion (27).

9. A knife plate as claimed in claim 8, **characterised in that** the first portion (25) extends over a distance of approx. 0.5 mm, measured parallel to the centre line (23) of the knife plate (1).

10. A knife plate as claimed in one of the preceding claims, **characterised in that** the height of the chip guide step (17) in the region of the high point (19) is 0.05 mm to 0.3 mm, preferably 0.1 mm.

11. A knife plate as claimed in one of the preceding claims, **characterised by** being in the form of a turnplate which, in order to achieve the best possible utilisation of the cutting edges, can be turned 180° about a centre axis extending perpendicular to the surface (the front of the knife (11)).

12. A knife plate as claimed in one of the preceding claims, **characterised in that** the said plate is of a substantially rectangular design, the longer exterior edge of the knife plate (1; 1/1) comprising the secondary cutting edge (3).

13. A knife plate as claimed in one of the preceding claims, **characterised in that** the distance between the apex (9) and the high point (19), said distance being measured perpendicular to the centre line (23) of the knife plate (1), is specified in dependence on the material of the machined workpiece.

14. A knife plate as claimed in claim 13, **characterised in that**, where a workpiece is made of steel, the distance between the apex (9) and the high point (19) is 3/10 mm to 7/10 mm, preferably 5/10 mm.

15. A knife plate as claimed in claim 13, **characterised in that**, where a workpiece is made of aluminum, the distance between the apex (9) and the high point (19) is 5/10 mm to 10/10 mm, preferably 8/10 mm.

## Revendications

1. Plaquette de découpe pour alésoir, destinée au finissage de pièces d'usinage métalliques, présentant un tranchant principal et un tranchant secondaire (7,3), avec une face de coupe atteignant ces tranchants et un niveau de guidage d'alésures (17) délimitant celle-ci, caractérisée en ce que le niveau de guidage d'alésures (17), dans la zone du sommet (9) des tranchants (3,7), présente un point haut (19), depuis lequel le niveau de guidage d'alésures (17) part en inclinaison dans la zone du tranchant principal (7), à savoir qu'il présente un écart croissant par rapport au tranchant principal (7), et s'étend, dans la zone du tranchant secondaire (3), parallèlement au tranchant secondaire, ou est également disposé de façon inclinée.

2. Plaquette de découpe selon la revendication 1, caractérisée en ce que le niveau de guidage d'alésures dans la zone du tranchant secondaire (3) est disposé en inclinaison régulière et - vu de dessus sur la face avant (11) de la plaquette de découpe (1) - former avec le tranchant secondaire un angle aigu.

3. Plaquette de découpe selon la revendication 1 ou 2, caractérisée en ce que le tranchant de la plaquette de découpe (1), dans la zone du tranchant principal (7), présente deux zones (35, 37) ayant des angles d'inclinaison différents.

4. Plaquette de découpe selon la revendication 3, caractérisée en ce que le tranchant principal (7), à l'avant, dans une première zone (37) - vu dans la direction de la face frontale (5) de la plaquette de découpe (1) - est incliné en formant un angle d'environ 30° avec la ligne médiane imaginaire (23) de la plaquette de découpe (1), et, à l'arrière, dans une seconde zone (35), qui est contiguë au sommet (9) et se raccorde au tranchant secondaire (3), forme un angle environ égal à 3° par rapport à la ligne médiane imaginaire (23) de la plaquette de découpe (1).

5. Plaquette de découpe selon la revendication 3 ou 4, caractérisée en ce que le niveau de guidage d'alésures (17), en partant du point haut (19), vu dans la direction de la face frontale (5) de la plaquette de découpe (1), est incliné selon un angle compris entre 10° et 30°, de préférence compris entre 15° et 25°, et particulièrement de 20°.

6. Plaquette de découpe selon la revendication 1 ou 2, caractérisée en ce que le tranchant principal (7) de la plaquette de découpe (1) forme un arc.

7. Plaquette de découpe selon la revendication 6, caractérisée en ce que le niveau de guidage d'alésures (17), en partant du point haut (19) - vu dans la direction de la face frontale (5) de la plaquette de découpe (1/1) - est incliné sur un premier segment (25) en formant un angle compris entre environ 10° et 30°, particulièrement compris entre 15° et 25° et de préférence égal à environ 20° par rapport à la ligne médiane imaginaire (23) de la plaquette de découpe (1/1), et sur un second segment (27) qui s'y raccorde, est incliné en formant un angle environ compris entre 40° et 80°, particulièrement entre 50° et 70°, et de préférence égal à 60°.

8. Plaquette de découpe selon la revendication 7, caractérisée en ce que le premier segment (25) du niveau de guidage d'alésures (17) est essentiellement plus court que le second segment (27).

9. Plaquette de découpe selon la revendication 8, caractérisée en ce que le premier segment (25) s'étend sur une longueur - mesurée parallèlement à la ligne médiane (23) de la plaquette de découpe (1) - environ égale à 0,5 mm.

10. Plaquette de découpe selon l'une des revendications précédentes, caractérisée en ce que la hauteur du niveau de guidage d'alésures (17) dans la zone du point haut (19) est comprise entre 0,05 mm et 0,3 mm, et est de préférence égale à 0,1 mm.

11. Plaquette de découpe selon l'une des revendications précédentes, caractérisée par sa conception en tant que plaque réversible, qui, pour une utilisation optimale des tranchants, peut pivoter de 180° par rapport à un axe médian s'étendant perpendiculairement à la surface (face du couteau (11)).

12. Plaquette de découpe selon l'une des revendications précédentes, caractérisée en ce que celle-ci est conçue de façon essentiellement de forme rectangulaire, dans laquelle l'arête extérieure la plus longue de la plaquette de découpe (1 ; 1/1) représente le tranchant secondaire (3).

13. Plaquette de découpe selon l'une des revendications précédentes, caractérisée en ce que l'écart - mesuré perpendiculairement à la ligne médiane (23) de la plaquette de découpe (1) - entre le sommet (9) et le point haut (19) est défini en fonction du matériau de la pièce usinée.

14. Plaquette de découpe selon la revendication 13, caractérisée en ce que l'écart entre le sommet (9) et le point haut (19) est, dans le cas d'une pièce en acier, compris entre 3/10 mm et 7/10 mm, et est de préférence égal à 5/10 mm.

15. Plaquette de découpe selon la revendication 13, caractérisée en ce que l'écart entre le sommet (9) et le point haut (19), dans le cas d'une pièce en aluminium, est compris entre 5/10 mm et 10/10 mm, et est de préférence égal à 8/10 mm.
